# EUROPÄISCHE PATENTANMELDUNG

(11) **EP 0 825 018 A2**
(43) Veröffentlichungstag der Anmeldung: **25.02.1998**
(21) Anmeldenummer: 97114558.6
(22) Anmeldetag: 22.08.1997
(51) Int. Cl.: B32B 27/00, A61F 13/00

(54) **Laminat, Verfahren zu seiner Herstellung und seine Verwendung**

(30) Priorität: 23.08.1996 DE 19634196
(71) Anmelder: BP Chemicals PlasTec GmbH, 89165 Dietenheim (DE)
(72) Erfinder: von Wolff, Axel, 21447 Handorf (DE); Waller, Paul, 83026 Rosenheim (DE); Sturm, Valentin, 81379 München (DE)
(74) Vertreter: Dost, Wolfgang, Dr.rer.nat., Dipl.-Chem.

(57) **Zusammenfassung**

Ein Laminat umfassend eine offenporige Matrixstruktur und einen darauf liegenden porösen Polymerfilm ist dadurch erhältlich, daß die Matrixstruktur einer Unterdruck-Beschichtungsvorrichtung zugeführt wird, in der eine Polymerschmelze auf diese Matrixstruktur aufgebracht wird, wodurch die Polymerschmelze in Richtung des Unterdrucks der Beschichtungsvorrichtung angesaugt wird, Blasen bildet, die wenigstens z.T. überdehnt aufplatzen und unter Bildung des porösen Polymerfilms erkaltet, der im wesentlichen durch Formschluß mit der Matrixstruktur verbunden ist, wobei der Polymerfilm im wesentlichen eine Abbildung der Matrixstrukturoberfläche darstellt.

## Beschreibung

Die vorliegende Erfindung betrifft ein Laminat, ein Verfahren zu seiner Herstellung sowie seine Verwendung, insbesondere für den Hygienebereich und für medizinische Zwecke.

Als Laminate für den Hygienebereich, z.B. Kinder- und Erwachsenenwindeln und Damenhygieneprodukte, und für medizinische Zwecke, z.B. Pflaster und Wundverbände oder zur Fixierung von z.B. Injektionskanülen, sind bereits zahlreiche Materialien auf Folien-, Gewebe-, Gewirke- oder Vlies-Basis bekannt und auch in der Praxis eingesetzt. Da die Produkte in der Regel eine ganze Reihe von Anforderungen erfüllen müssen, in dem sie zwar weich und schmiegsam sein sollen, je nach Verwendungszweck bevorzugt mit "textilen Griff", aber auch genügend stabil und widerstandsfähig sein müssen je nach Einsatzgebiet, um z. B. den Wundbereich genügend zu schützen, wurden auch schon die verschiedensten mehrschichtigen Produkte vorgeschlagen. Derartige Laminate sind beispielsweise in den EP-A 45 592, EP A 81 990, EP-A 257 133, WO 85/05322, WO 85/05373, WO 89/01345, US-A-4 727 868 und US-A-4 751 133 beschrieben. Sie werden hergestellt durch Tauchen oder Verbinden der einzelnen Trägermaterialien über eine Klebeschicht und weisen dabei den Nachteil auf, daß entweder der angenehme "textile Griff" verloren geht, wenn beispielsweise beim Tauchen das Fasergewebe ganz von Polymermasse umgeben wird, wie in US-A-4 727 868 beschrieben, oder daß sie durch das Zusammenkaschieren mit Klebemassenschichten einen großen Teil ihrer Flexibilität und Geschmeidigkeit verlieren.

Weiterhin ist ein Verbund aus einer fein gelochten Polyethylen-Folie und einem Mullgewebe bekannt, der mit einer Selbstklebemasse beschichtet ist. Dieser wird in der Weise hergestellt, daß zuerst die Klebemasseschicht auf einem Hilfsträger erzeugt wird, und auf diese in noch feuchtem Zustand der Mull aufgebracht wird. Das Mullgewebe sinkt teilweise in die Klebemasse ein. Dann wird das Lösungsmittel der Klebemasse im Trockenkanal abgedampft. Die Schicht aus Klebemasse und Mull wird vom Hilfsträger abgenommen und auf der Mullseite die gelochte Polyethylenfolie aufkaschiert. Der Zusammenhalt des Laminats wird also durch die Klebeschicht bewirkt. Dies hat jedoch den Nachteil, daß das Produkt etwas steif und brettig wirkt und der Verbund nicht ganz zuverlässig stabil ist, d.h. es tritt bisweilen ein Delaminieren auf. Die Folie löst sich dabei ab. Weiterhin nachteilig ist, daß die Atmungsaktivität eingeschränkt wird, da eine doppelte Klebeschicht, nämlich ein Kleber für die Mullfolie und ein weiterer Kleber zum Haften des Produkts auf der Haut vorgesehen ist.

Aus DE-40 16 348 C2 ist ein Verfahren zur Herstellung eines Verbundvlieses aus einem Vlies und einer Bahn aus einem polymeren Stoff bekannt, bei dem das Vlies und der polymere Stoff ohne Kleber miteinander verbunden sind. Hierzu wird die aus der Legestation erhaltene Wirrfaserlage direkt einer Unterdruck-Beschichtungsvorrichtung zugeführt, in der die Bahn aus dem polymeren Stoff in noch schmelzflüssigem Zustand auf die Wirrfäserlage, mit geringer Eindringtiefe des polymeren Stoffes in die Wirrfaserlage, aufgebracht wird, wodurch die Wirrfaserlage gleichzeitig zu einem Vlies verfestigt wird. Das hierbei entstehende Verbundvlies ist jedoch weder gasnoch wasserdampfdurchlässig.

Aufgabe der vorliegenden Erfindung war es deshalb, ein poröses, gas- und wasserdampfpermeables Laminat herzustellen, das sich insbesondere für den Hygienebereich und für medizinische Zwecke eignet und die vorgenannten Nachteile nicht aufweist.

Diese Aufgabe wird erfindungsgemäß durch ein Laminat gemaß Patentanspruch 1 gelöst. Weiterhin betrifft die Erfindung ein Verfahren zur Herstellung dieses Laminats sowie seine Verwendung, insbesondere für den Hygienebereich und für medizinische Zwecke. Weitere bevorzugte Ausführungsformen der Erfindung sind in der nachfolgenden Beschreibung, den Figuren und den weiteren Ansprüchen definiert.

In den Figuren zeigen:
- Fig. 1a bis 1c: eine schematische Darstellung des erfindungsgemäßen Laminierprozesses;
- Fig. 2: einen Querschnitt eines erfindungsgemäßen Laminats;
- Fig. 3: eine fotographische Aufnahme einer Draufsicht auf ein erfindungsgemäßes Laminat;
- Fig. 4: eine schematische Darstellung einer erfindungsgemäßen Unterdruck-Beschichtungsvorrichtung mit Stützzylinder; und
- Fig. 5: eine schematische Darstellung einer erfindungsgemäßen Unterdruck-Beschichtungsvorrichtung mit Stützband.

Bei dem erfindungsgemäßen Unterdruckbeschichtungsverfahren wird der sich noch in schmelzflüssigen Zustand befindliche Polymerfilm auf die offenporige Matrixstruktur aufgebracht und mit Hilfe des Unterdrucks, der durch den perforierten Stützkörper an der Matrixstruktur anliegt, in Richtung der Beschichtungsvorrichtung angesaugt. Dabei bilden sich Blasen, die wenigstens z.T. überdehnt aufplatzen und unter Bildung des porösen Polymerfilms erkalten. Das erhaltene Laminat ist dampf- und gasdurchlässig sowie besonders drapierfähig.

In einer bevorzugten Ausführungsform der Erfindung ist die Matrixstruktur wenigstens teilweise mit Polymermasse saturiert. Insbesondere liegen zwischen 50 und 90 Gew.-%, vorzugsweise zwischen 70 bis 90 Gew.-% der Polymermasse des Polymerfilms innerhalb der Dicke der Matrixstruktur vor. Vorteilhafterweise liegen pro m² Laminat 5 bis 100 g, insbesondere 10 bis 40 g, Polymerfilm und 10 bis 200 g, vorzugsweise 20 bis 100 g, Matrixstruktur vor.

Die erfindungsgemäß geeigneten offenporigen Matrixstrukturen unterliegen an sich keiner besonderen Beschränkung. Geeigneterweise sind sie textil und drapierfähig und bestehen im wesentlichen aus Fasern. Sie können mehr oder weniger großporig sein und beispielsweise aus Mull, Gewebe, Gewirke, Netzen, Gittertüll, Spinnvlies- oder Faservliesstoffen, oder gelochten Vliesen wie beispielsweise Sontara®-Vlies o.ä. bestehen. Hierbei eignen sich insbesondere derartige offenporige Matrixstrukturen, wie sie bereits bei Hygiene- und Medikalprodukten Verwendung finden. Die offenporigen Matrixstrukturen können aus Naturfasern, wie Baumwolle oder Cellulose, oder Kunstfasern, wie Acetätseide, Polyester, Polyamide, Polyacrylate, Polyurethane, Synthesekautschuke, Polyolefine oder Gemischen davon, bestehen. Der mittlere Porendurchmesser der Matrixstruktur kann 0,01 bis 3 mm, vorzugsweise 0,2 bis 1,0 mm, betragen. Beispielsweise weist ein geeigneter Baumwollmull eine Fadenzahl von 9,8 x 6,6 Fäden/cm² auf, d.h. die Löcher sind ca. 1 mm² groß. Auch ein Spinnvliesstoff mit einem Flächengewicht von 15 bis 17 g/m² aus Polypropylen mit einem mittleren Faserdurchmesser von 17 bis 22 µm und einem mittleren Porendurchmesser von 0,1 bis 0,5 mm hat sich als geeignet erwiesen. Wesentlich ist, daß die Matrixstruktur offenporig ist, damit bei der Herstellung des Laminats die Polymerschmelze in die Poren eindringen kann und Blasen bilden kann, die dann im überdehnten Zustand aufplatzen können.

Vorzugsweise besteht die offenporige Matrixstruktur aus einem Material, das weich, biegsam und zumindest in einer Richtung elastisch oder dehnbar ist, um sich dadurch z.B. besonders gut den Bewegungen der Haut anpassen zu können. Daneben besteht aber auch die Möglichkeit, daß das Material in mindestens einer Richtung unelastisch ist.

Gemäß der Erfindung besonders geeignete Polymerfilme bestehen aus Thermoplasten, thermoplastischen Elastomeren, Synthesekautschuk enthaltenden Copolymeren wie ein Styrol-Butadien-Styrol- oder ein Acryl-Butadien-Styrol-Copolymerisat, einem Polybutylenterephthalat, Polyethylenterephthalat oder seinen Copolymeren, Polyurethanen, oder aus deren Gemischen, vorzugsweise aus Polyolefinen oder Polyolefin-Copolymeren, insbesondere Polyethylen, Polyethylen-Copolymer oder Polypropylen. Daneben besteht auch die Möglichkeit, daß ein mikroporöses, wasserdampf-permeables, jedoch wasserdichtes Polymer eingesetzt wird. Solche mikroporösen Polymere können Homopolymere, Polymer-Legierungen, Co-Polymere oder Polymer-Compounds (Polymer und geeignete Additive und/oder Füllstoffe), wie z.B. ein PE-Compound gemäß europäischer Patentschrift 0 380 353 B1, sein.

Üblicherweise werden Hygienefolien eingefärbt, z.B. weiß mit Titandioxid. Hinzu kommen übliche Zusatzstoffe und Verarbeitungshilfsmittel, die teilweise Betriebsgeheimnis der Verarbeiter sind.

Die Schichtdicke der zur Herstellung des Polymerfilms verwendeten Ausgangspolymerbahn unterliegt an sich keiner Beschränkung. Das Flächengewicht des Ausgangspolymerfilms liegt im Bereich von 5 bis 100 g/m², insbesondere im Bereich von 10 bis 30 g/m².

Für die offenporige Matrixstruktur und den Polymerfilm können auch biologisch abbaubare Stoffe, z.B. auf Cellulosebasis, Viskosebasis, Gelatine in Faserform, Poly-ε-Caprolacton, Polylactide oder lineare Polyester aus 3-Hydroxybuttersäure und 3-Hydroxyvaleriansäure oder dergleichen verwendet werden.

Vorteilhafterweise beträgt der mittlere Porendurchmesser der Polymerfilmporen im Laminat 0,01 bis 1,0 mm, vorzugsweise 0,1 bis 0,6 mm. Dicke und Materialeigenschaften des Laminats sind variabel, je nach speziellem Anwendungsgebiet. Somit kann die Lochstruktur mehr oder weniger stark ausgeprägt sein. Vorteilhafterweise sollte die offene Fläche der Folie jedoch mindestens 5 %, vorzugsweise 10 bis 20 % betragen. Üblicherweise liegt die Dicke des Laminats zwischen 0,2 und 5 mm, vorzugsweise zwischen 0,2 und 2 mm.

Bei der Herstellung des Laminats wird durch das Einsaugen der Polymerschmelze deren Flächenmasse verringert, wobei gleichzeitig der Erstarrungsprozeß einsetzt. Dabei bildet der Polymerfilm innerhalb der Poren, die innerhalb der Matrixstruktur liegen, einen dünnen Film, der im wesentlichen im gespannten Zustand je nach Dicke noch eine geschlossene Oberfläche bildet oder im überdehnten Zustand wenigstens teilweise aufplatzt. Betrachtet man das Laminat aus der Blickrichtung der Schmelzauflage, so wird die Matrixstrukturoberfläche weitgehend abgebildet, so daß die die Matrixporen teilweise abschließenden "Spannsegel" die Form oder Linienzüge der offenen Matrixstruktur besitzen. Somit ist der Polymerfilm vorzugsweise in den offenen Poren der Matrixstruktur in Form von Spannselgeln ausgebildet.

In einer bevorzugten Ausgestaltung der Erfindung ist das Laminat auf der Matrixstrukturseite mit einer mikroporösen bis porösen, wasserdampf- und gasdurchlässigen, insbesondere hautverträglichen, Selbstklebeschicht beschichtet. Auf der Selbstklebeschicht kann, vorzugsweise mittig, eine Wundauflage angeordnet sein, die kleiner als die Laminatfläche ist. Vorteilhafterweise bleibt in diesem Fall noch ein ausreichend breiter klebender Rand frei, wenn das Trägermaterial als Wundverband eingesetzt werden soll. Die Selbstklebeschicht und die gegebenenfalls auf ihr angeordnete Wundauflage sind üblicherweise mit einem klebstoffabweisend ausgerüsteten Hilfsträger, meist aus silikonisiertem Papier, bis zur Verwendung abgedeckt. Um ein leichtes, rückstandsfreies Wiederabrollen der Pflasterrolle zu ermöglichen, kann das Laminat auf seiner Folienseite mit einer klebstoffabweisenden Beschichtung, beispielsweise auf Silikon-Basis, versehen sein, falls die Klebeschicht zu stark mit der Folienseite verkleben sollte. Bei Beschichtung des Laminats mit einer Selbstklebemasse wird die Klebemasse, vorzugsweise eine Polyacrylatmasse als Lösung, auf einen klebstoffabweisend ausgerüsteten Zwischenträger, beispielsweise silikonisiertes Kraftpapier oder silikonisierte Folie, aufgestrichen und durch schnelles Verdampfen des Lösungsmittels bei erhöhter Temperatur zu einem feinblasigen Zustand getrocknet. Nach Abkühlen auf Raumtemperatur wird das Laminat auf die Klebeschicht aufkaschiert und gegebenenfalls einem Kalandervorgang gemäß DE-Patent 15 69 901 unterworfen. Dadurch wird die Klebemasse auf das Trägermaterial übertragen und die feinen Bläschen werden aufgebrochen, wodurch ein feinporiges mikroporöses Gefüge entsteht. Auch ein Verfahren gemäß der DE 40 32 776 C2 hat sich als sehr geeignet erwiesen.

Um ein besonders gut luft- und wasserdampfdurchlässiges Produkt zu erhalten, kann die Selbstklebemasse auch flächenmäßig begrenzt, d.h. z.B. pünktchenförmig im Siebdruckverfahren oder in einem anderen Muster im Rasterdruckverfahren, aufgebracht werden. Neben den Klebemassen aus Lösung oder als Dispersion haben sich dabei insbesondere Heißschmelzklebemassen beispielsweise auf SEBS-Basis, gegebenenfalls über einen Zwischenträger aufgebracht, als günstig erwiesen. Wenn es die Klebemasse erfordert, kann noch ein Vernetzungsprozeß durch Wärmeeinwirkung oder andere Verfahren wie UV- oder Elektronenbestrahlung nachgeschaltet werden.

Daneben besteht auch die Möglichkeit, daß das Laminat auf der Polymerfilmseite mit einem Metall bedampft ist, silikonisiert ist oder mit einer weiteren offenporigen Matrixstruktur, die gleich oder verschieden von der o.g. offenporigen Matrixstruktur ist, verbunden sein kann.

In einer bevorzugten Ausgestaltung der Erfindung besteht der Polymerfilm aus einer einzigen Schicht. Er kann aber auch aus zwei oder mehreren coextrudierten Schichten bestehen.

Insgesamt ist das erfindungsgemäße Laminat sehr gut luft- und wasserdampfdurchlässig. Die Luftdurchlässigkeit beträgt in der Regel mehr als 100 cm³/cm²/s. So wurde beispielsweise bei einem Laminat aus einem Mull von ca. 43 g/m² (Fadenzahl 9,8 x 6,6 Fäden/cm²) und einer Polyethylenfolie von 20 g/m² eine Luftdurchlässigkeit von 200 cm³/cm²/s gemessen. Diese Werte können durch eine gegebenenfalls aufgebrachte Selbstklebeschicht mehr oder weniger reduziert werden. Wählt man jedoch beispielsweise einen punktförmigen Klebstoffauftrag im Siebdruck, so bleibt immer noch eine außerordentlich gute Luftdurchlässigkeit.

Da bei dem erfindungsgemäßen Laminat, anders als bei im Stand der Technik bekannten Laminaten, kein Klebstoff zwischen der offenporigen Matrixstruktur und dem Polymerfllm verwendet wird, ist es besonders gut luft- und wasserdampfdurchlässig und damit äußerst gut hautverträglich. Darüberhinaus bleiben weitgehend die ursprünglichen Eigenschaften der Matrixstruktur wie Weichheit, Drapierfähigkeit, Anschmiegsamkeit, elastisches Verhalten und Dehnfähigkeit erhalten, wobei das Laminat keine signifikante Dickezunahme gegenüber der Ausgangsdicke der Matrixstruktur erfährt.

Zur Durchführung des erfindungsgemäßen Verfahrens dient eine Unterdruck-Beschichtungsvorrichtung mit einem Extruder, kombiniert mit einer Breitschlitzdüse und Kühleinrichtungen, sowie einem umlaufenden perforierten Stützkörper, ausgebildet als perforierter Stützzylinder, perforiertes Stützband oder Siebband. Man kann auch mit zwei oder mehreren Extrudern arbeiten. Die Extruder weisen vorzugsweise eine Breitschlitzdüse auf, deren Auflaufwinkel verstellbar ist und mit deren Hilfe die Polymerschmelze auf das offenporige Matrixmaterial aufgetragen wird.

Durch den Einsatz des perforierten Stützkörpers läßt sich die Porenverteilung sowie die Größe der Poren des Laminats über die Höhe des Unterdrucks, die Wahl der Lochanordnung, die Lochstruktur und die Lochgeometrie gezielt steuern. Daneben überlagert die Porenstruktur der Matrixstruktur diese Porenverteilung und Porengrößen.

In Richtung der Unterdruck-Beschichtungsvorrichtung wird die Polymerschmelze in Abhängigkeit des Verformungsweges entlang der Matrixstuktur-Dicken-Richtung ständig verringert. Durch den zwischen zunächst unverformtem Schmelzefilm und der Auflagefläche der Matrixstruktur auf dem Stützkörper entstehenden Unterdruck expandiert der Schmelzefilm vornehmlich blasenartig dreidimensional in Richtung der Unterdruck-Beschichtungsvorrichtung, wobei weitgehend die entstehenden Blasendurchmesser größer als die in der Matrixstruktur vorliegenden Porendurchmesser sind. Dadurch wird eine weitgehend formschlüssige Verbindung zwischen Polymerfilm und Matrixstruktur erreicht. Gleichzeitig wird durch eine bis zu 90-%ige Anordnung der Polymerfilmmasse innerhalb der ursprünglichen Dicke der Matrixstruktur, wie oben beschrieben, eine nur geringe Zunahme der Laminatdicke gegenüber der ursprünglichen Matrixstrukturdicke erreicht und damit eine nur geringe Zunahme des mit der Laminatdicke korrelierenden Biegewiderstands erreicht. In einer bevorzugten Ausgestaltung der Erfindung wird auf die der offenporigen Matrixstruktur abgewandten Seite der Polymerschmelze eine weitere offenporige Matrixstruktur aufgebracht.

Die erfindungsgemäßen Laminate sind besonders gut zu verwenden bei Erwachsenen- oder Kinderwindeln, im Damenhygienebereich oder als Medikalfolien, z.B. als Betteinlagen oder Operationsabdeckungen. Weiterhin eignen sie sich als Verpackungsmaterial für Produkte, die z.B. Feuchtigkeit freisetzen oder gut belüftet sein müssen, ohne einen Schutz gegen Verschmutzung zu verlieren, wie z.B. Lebensmittel, oder im Bausektor, z.B. für Drainagezwecke, sowie im Bekleidungssektor, wenn atmungsaktive Eigenschaften, wie z.B. bei Schutzbekleidung, erwünscht sind.

In einer weiteren besonders bevorzugten Ausführungsform der Erfindung werden die erfindungsgemäßen Laminate als medizinische Pflaster, Fixierpflaster, elastischer Mull, elastische Binde, elastische Bandage oder dergleichen eingesetzt. Hierzu wird vorteilhafterweise das mit einer hautverträglichen Selbstklebeschicht beschichtete Laminat für den Gebrauch konfektioniert, wobei das Material in Streifen gewünschter Länge und Breite geschnitten wird, die gegebenenfalls mit je einer mittigen Wundauflage versehen sowie auf der Klebeschichtseite mit einem silikonisierten Abdeckpapier eingedeckt werden. Die einzelnen Pflaster werden dann in eine Verpackung eingesiegelt und durch γ-Bestrahlung sterilisiert. Auf diese Weise hergestellte Laminate bieten den Vorteil, daß sie so flexibel und dehnungsfähig sind, daß sie sich den Unebenheiten und Bewegungen der Haut optimal anpassen und wasserdampf- und sauerstoffdurchlässig sind, so daß die Haut darunter "atmen" kann.

Die Erfindung wird anhand der Figuren und der folgenden Beispiele, die bevorzugte Ausführungsformen der Erfindung darstellen, naher erläutert.

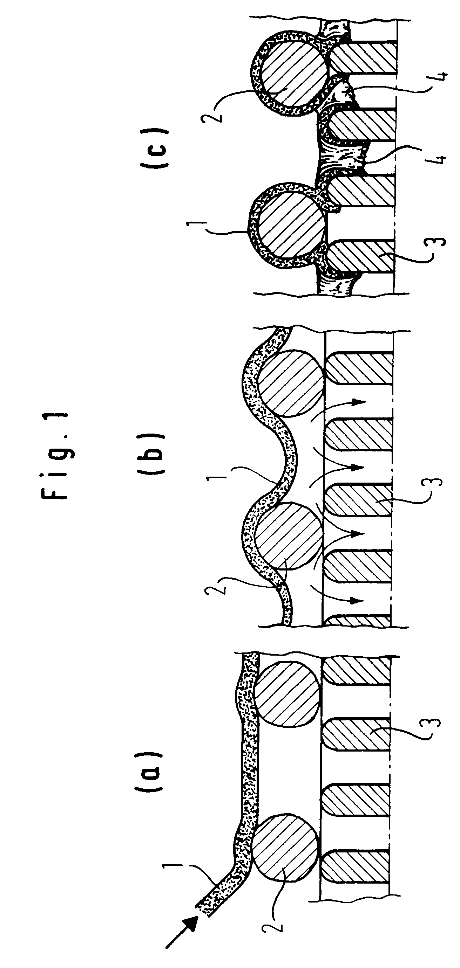

Fig. 1 zeigt schematisch das erfindungsgemäße Verfahren, wobei die Figuren 1a bis 1c schematisch den zeitlichen Ablauf der hintereinander erfolgenden Schritte der Laminierung einer Matrixstruktur mit einem Polymerfilm auf einer Unterdruck-Beschichtungsvorrichtung zeigen. In Fig. 1a wird ein Polymerfilm im schmelzflüssigen Zustand über eine Matrixstruktur 2, welche auf dem perforierten Stützkörper 3 liegt, geführt und gemäß Fig. 1b durch Unterdruck in Richtung des Stützkörpers 3 und teilweise auch bis in die Perforationsbohrungen des Stützkörpers 3 gesaugt, wobei, wie aus Fig. 1c ersichtlich, überdehnte Verformungsbereiche des Polymerfilms 1 aufplatzen und Poren 4 im Polymerfilm 1 bilden.

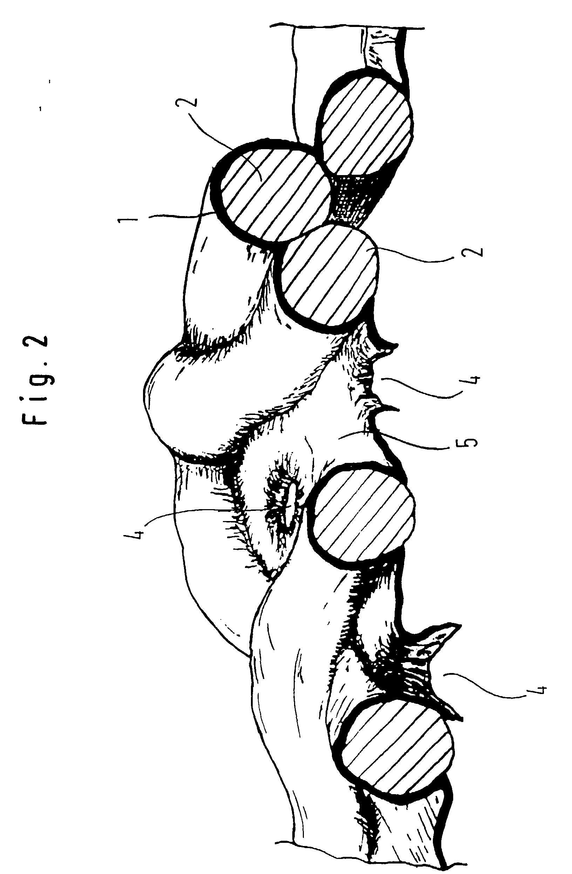

Fig. 2 zeigt als Querschnittsdarstellung die Ausbildung von "Spannsegeln" 5 mit den Poren 4 des Polymerfilms 1 laminiert über der Matrixstruktur 2.

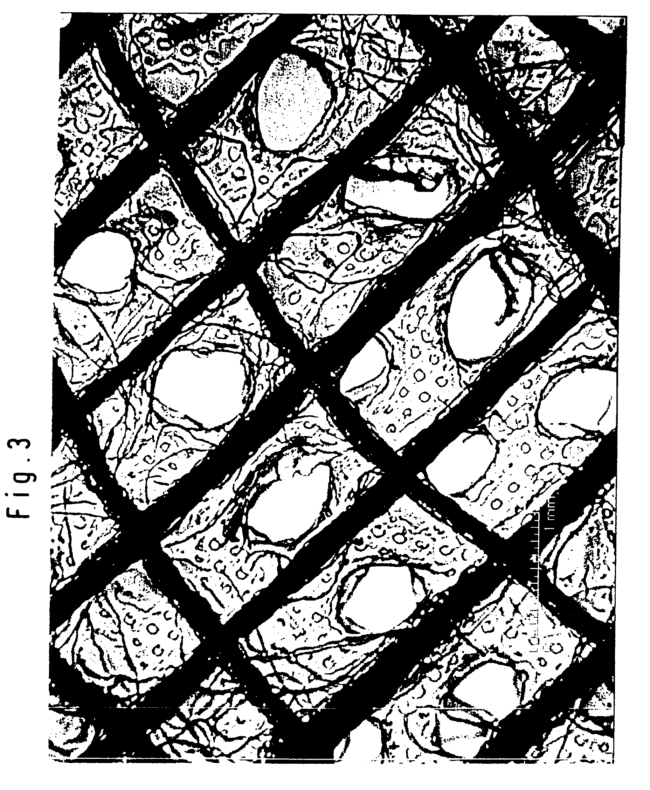

Fig. 3 zeigt eine fotographische Aufnahme einer Draufsicht auf ein mit einem Polymerfilm lamiertes Mullgewebe, wobei der Polymerfilm porös erkaltet ist und die Struktur des Mullgewebes gleichzeitig abbildet. Der Maßstab der Aufnahme ist unten links im Bild angegeben.

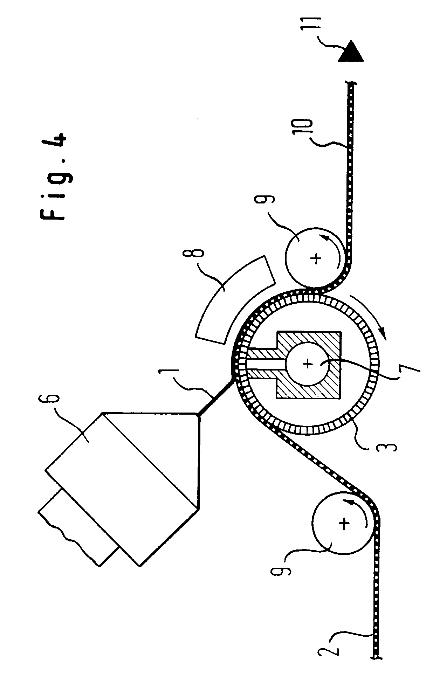

Fig. 4 zeigt einen schematischen Aufbau einer erfindungsgemäßen Unterdruck-Beschichtungsanlage, wobei der Stützkörper als Stützzylinder 3 ausgebildet ist. Die Matrixstruktur 2 wird über eine Umlenkrolle 9 auf den perforierten Stützzylinder 3 aufgelegt und mit dem Polymerfilm 1, der im schmelzflüssigen Zustand aus dem Breitschlitzwerkzeug 6 kommt, belegt. Der Polymerfilm 1 wird über die Unterdruck-Vorrichtung 7 in die Matrixstruktur 2 gesaugt, während der Strecke bis zur Abnahmerolle 9 durch eine Kühlvorrichtung 8 abgekühlt und dann vom Stützzylinder 3 abgenommen. Die Produktionsrichtung 11 des fertigen Laminats 10 ist durch den Pfeil 11 gezeichnet.

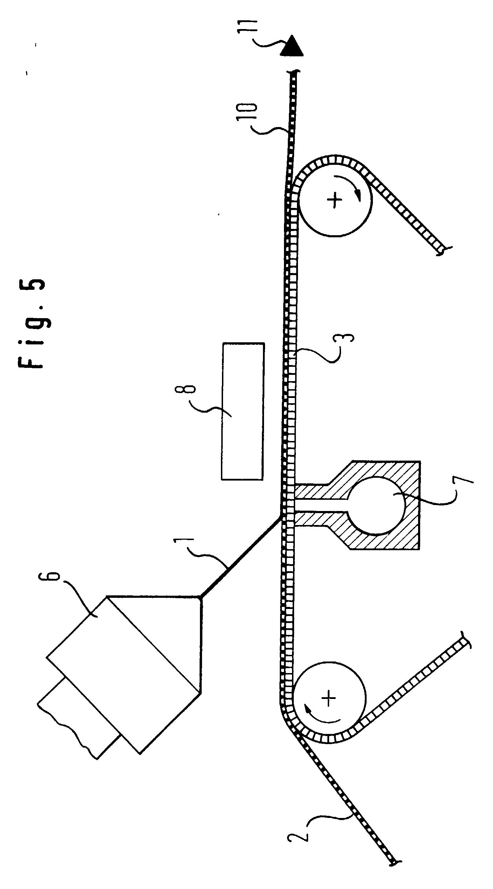

Fig. 5 zeigt eine weitere schematische Darstellung einer erfindungsgemäßen Unterdruck-Beschichtungsvorrichtung, wobei der Stützkörper als Stützband 3 oder Siebband 3 ausgebildet ist. Der Polymerfilm 1 wird aus dem Breitschlitzwerkzeug 6 im schmelzflüssigen Zustand auf die Matrixstruktur 2 aufgelegt und über die Unterdruckvorrichtung 7 in die Matrixstruktur 2 eingesaugt, durch eine Kühlvorrichung 8 über eine Strecke abgekühlt und als fertiges Laminat 10 in Produktionsrichtung 11 abgenommen.

### BEISPIEL 1

### Poröse, atmungsaktive Beschichtung eines Vliesstoffes für Hygieneanwendungen

Ein Spinnvliesstoff mit einem Flächengewicht von 17 g/m² und einer Dicke von etwa 17 µm wird mit einem Schmelzefilm laminiert, der ein durchschnittliches Flächengewicht von 15 g/m² besitzt. Der Schmelzefilm besteht aus einem Polymerblend aus 30 Gew.-% DOWLEX-LLDPE 2045 der Firma Dow-Chemicals und 65 Gew.-% LDPE 3020 H der Firma BASF und 5 Gew.-% Remafinweiß RB6AE der Firma Novachrome/Hoechst.

Der in der Unterdruck-Beschichtungsvorrichtung mit Bohrungen versehene Stützzylinder besitzt eine offene Fläche von etwa 65 % bei einem Bohrungsdurchmesser von 0,4 mm. Das angelegte Vakuum beträgt 0,3 bis 0,4 x 10⁵ N/m².

Das damit erhaltene Laminat zeichnet sich durch eine hohe Luftdurchlässigkeit von 8000 g/24h m² bei einer Porosität des Materials von etwa 15 % aus. Die Laminatdicke liegt bei etwa 22 bis 24 µm.

### BEISPIEL 2

### Poröses, atmungsaktives Laminat für ein Fixierpflaster für Medikalanwendungen

Ein Baumwoll-Mull-Gewebe mit einem Flächengewicht von etwa 24 g/m² und einer Fadenzahl von 9,8 x 6,6 Fäden/cm² wird mit einem Schmelzefilm laminiert, der ein durchschnittliches Flächengewicht von etwa 15 g/m² besitzt. Der Schmelzefilm besteht aus einem ein EVA enthaltendes Polyethylen, das unter der Typenbezeichnung EVATHANE 1040 VN4 der Firma ATO-Chemie erhältlich ist.

Der in der Unterdruck-Beschichtungsvorrichtung eingesetzte mit Bohrungen versehene Stützzylinder besitzt eine offene Fläche von etwa 35 bis 40 % bei einem mittleren Bohrungsdurchmesser von 0,6 mm. Das angelegte Vakuum beträgt 0,3 bis 0,4 x 10⁵ N/m².

Das erhaltene Laminat besitzt eine besondere hohe Luftdurchlässigkeit von 200 cm³/cm²/s bei einer offenen Fläche von 10 bis 12 % und ist gut von Hand reißbar.

## Patentansprüche

1. Laminat, umfassend eine offenporige Matrixstruktur und einen darauf liegenden porösen Polymerfilm, erhältlich, indem man die Matrixstruktur einer Unterdruck-Beschichtungsvorrichtung zuführt, in der eine Polymerschmelze auf die Matrixstruktur aufgebracht wird, wodurch die Polymerschmelze in Richtung des Unterdrucks der Beschichtungsvorrichtung angesaugt wird, Blasen bildet, die wenigstens zum Teil überdehnt aufplatzen und unter Bildung des porösen Polymerfilms erkaltet, der im wesentlichen durch Formschluß mit der Matrixstruktur verbunden ist, wobei der Polymerfilm im wesentlichen eine Abbildung der Matrixstrukturoberfläche darstellt.

2. Laminat nach Anspruch 1, dadurch gekennzeichnet, daß die Matrixstruktur wenigstens teilweise mit Polymerfilmmasse saturiert ist, wobei insbesondere zwischen 50 und 90 Gew.-%, vorzugsweise zwischen 70 und 90 Gew.-%, des Polymerfilms innerhalb der Dicke der Matrixstruktur vorliegen.

3. Laminat nach Anspruch 1 oder 2, dadurch gekennzeichnet, daß die Matrixstruktur aus Vliesstoff, Mull, Gewebe oder Gewirke besteht.

4. Laminat nach einem der Ansprüche 1 bis 3, dadurch gekennzeichnet, daß der Polymerfilm aus Thermoplasten, thermoplastischen Elastomeren oder aus deren Gemischen, vorzugsweise aus Polyolefinen, insbesondere Polyethylen oder Polypropylen, besteht.

5. Laminat nach einem der vorhergehenden Ansprüche, dadurch gekennzeichnet, daß es auf der Matrixstrukturseite mit einer mikroporösen bis porösen, wasserdampf- und gasdurchlässigen, hautverträglichen Selbstklebeschicht beschichtet ist, wobei vorzugsweise auf der Selbstklebeschicht eine Wundauflage angeordnet ist, die kleiner als die Laminatfläche ist.

6. Laminat nach einem der vorhergehenden Ansprüche, dadurch gekennzeichnet, daß es auf der Polymerfilmseite mit einer Metall bedampften Beschichtung oder einer klebstoffabweisenden Beschichtung, vorzugsweise auf Silikonbasis, versehen ist.

7. Verfahren zur Herstellung eines Laminats nach einem der vorhergehenden Ansprüche, dadurch gekennzeichnet, daß eine offenporige Matrixstruktur einer Unterdruck-Beschichtungsvorrichtung zugeführt wird, in der eine Polymerschmelze auf diese Matrixstruktur aufgebracht wird, wodurch die Polymerschmelze in Richtung des Unterdrucks der Beschichtungsvorrichtung angesaugt wird, Blasen bildet, die wenigstens zum Teil überdehnt aufplatzen und unter Bildung des porösen Polymerfilms erkaltet.

8. Verfahren nach Anspruch 7, dadurch gekennzeichnet, daß man eine Unterdruck-Beschichtungsvorrichtung mit einem perforierten Stützzylinder, einem perforierten Stützband oder einem Siebband verwendet.

9. Verwendung eines Laminats nach einem der Ansprüche 1 bis 6 als Trägermaterial für medizinische Pflaster oder für Fixierpflaster.

10. Verwendung eines Laminats nach einem der Ansprüche 1 bis 6 als elastischer Mull, elastische Binde, elastische Bandage oder als Windel- oder Medikalfolie oder Folie im Damenhygienebereich.
